# EUROPEAN PATENT APPLICATION

(11) **EP 3 208 769 A1**
(43) Date of publication of application: **23.08.2017**
(21) Application number: 17155012.2
(22) Date of filing: 07.02.2017
(51) Int. Cl.: G06T 5/50

(54) **METHOD COMPUTER PROGRAM AND SYSTEM FOR HOLOGRAM EXTRACTION**

(30) Priority: 08.02.2016 GB 201602198
(71) Applicant: IDscan Biometrics Limited, London E14 9QD (GB)
(72) Inventor: Helfawi, Humam, Yenisehir (TR); Sawan, Hasan, Yenisehir (TR)
(74) Representative: Armstrong, Rosemary

(57) **Abstract**

The invention comprises a method, computer program and system of hologram isolation comprising acquiring a plurality of images containing the hologram at a plurality of different image capture orientations, choosing a reference image from the plurality of images, registering a remainder of the plurality of images with respect to the reference image, correcting the registered images for varying image capture illumination conditions, isolating a first part of the hologram by subtracting a corrected image at a first image capture orientation from a corrected image at a second, subsequent, image capture orientation, repeating to isolate all parts of the hologram, and accumulating the parts of the hologram.

## Description

### Field of the Invention

The invention relates to a method and system for image hologram isolation, particularly, but not exclusively, for hologram isolation from images of identification documents.

### Background to the Invention

Holograms are increasingly being used in various forms for improving security. This is a consequence of their three dimensional nature, resulting in holograms being generally not readily reproducible. Holograms can be placed on many types of objects, such as banknotes and documents. Most identification documents (IDs), such as passports and driving licences, will comprise at least one hologram embedded in the ID. A missing hologram or a replacement two dimensional picture of the three dimensional hologram will indicate either a fake object or an object which has been tampered with. Detecting such fake objects is obviously important in many areas. This generally involves forming at least one image of the object comprising the hologram and isolating the hologram from its surroundings in the image. This has many challenges. To be of optimum use, the hologram should be presented as a clear representation free from other information in the image. To achieve this, various conditions in which the hologram exists within the image and environmental conditions in which the image is formed must be taken into account. This often results in the isolation of a hologram being a difficult task to accomplish, especially if speed is of the essence, which applies to many security areas, such as checking of IDs and banknotes. It is an aim of this invention to address some of these difficulties.

### Summary of the Invention

According to a first aspect of the invention there is provided a method of hologram isolation comprising the steps of:
(i) acquiring a plurality of images containing the hologram at a plurality of different image capture orientations,
(ii) choosing a reference image from the plurality of images,
(iii) registering a remainder of the plurality of images with respect to the reference image,
(iv) correcting the registered images for varying image capture illumination conditions,
(v) isolating a first part of the hologram by subtracting a corrected image at a first image capture orientation from a corrected image at a second, subsequent, image capture orientation,
(vi) repeating step (v) to isolate all parts of the hologram, and
(vii) accumulating the parts of the hologram.

The plurality of images containing the hologram may comprise images of an identification document (ID) containing the hologram or images of other objects, such as banknotes, containing the hologram.

Acquiring the plurality of images containing the hologram at a plurality of image capture orientations may comprise instructing a user to use an image capture device to capture the images.

Acquiring the plurality of images may comprise using a user interface of the image capture device to instruct a user to position the hologram at a first image capture orientation relative to the image capture device and acquire at least one image containing the hologram at the first image capture orientation and repeat for further different image capture orientations. Acquiring the plurality of images may comprise using the user interface to send feedback on the image capture to a user.

Acquiring the plurality of images may comprise using the user interface with a gyroscope of the image capture device to instruct a user to position the hologram at a first image capture orientation relative to the image capture device and acquire at least one image containing the hologram at the first image capture orientation and repeat for further different image capture orientations. Using a gyroscope ensures all required image capture orientations to be covered, avoiding any problems with missing data. Using a gyroscope also allows only one image to be acquired at each different image capture orientation, avoiding acquiring redundant images. When a gyroscope is not available, many images may be acquired at the same image capture orientation.

Acquiring the plurality of images may comprise using a flash of the image capture device for illumination during image capture.

Acquiring the plurality of images may comprise using an image processor of the image capture device to determine any cropping of the images, to discard an image having defective cropping and to instruct a user interface of the image capture device to instruct a user to acquire a further image to replace the discarded image. Determination of any cropping of an image may be carried out whilst other images are being acquired. This speeds up the process of acquiring the plurality of images.

Acquiring the plurality of images may be done in substantially real-time.

The image capture device may be a camera. The camera may be provided in a mobile phone.

Acquiring the plurality of images may comprise receiving the images from a remote location.

Acquiring the plurality of images may comprise acquiring at least one image at each of the plurality of different image capture orientations. Acquiring the plurality of images may comprise acquiring at least five images each at a different image capture orientation. Acquiring the plurality of images may comprise acquiring eight to twelve images each at a different image capture orientation. Acquiring the plurality of images may comprise storing each of the images along with its image capture orientation. Choosing a reference image from the plurality of images may comprise choosing a random image as the reference image. Choosing a reference image from the plurality of images may comprise ordering the images by image capture orientation and choosing a middle image as the reference image. Choosing a reference image from the plurality of images may comprise determining a best image and choosing the best image as the reference image. Choosing a reference image from the plurality of images may comprise determining if any of the acquired images are blurred and choosing a non-blurred image as the reference image. Determining if an acquired image is blurred may comprise applying a blurring algorithm to the acquired image, comparing a resultant image with the acquired image and if the images are substantially similar determining the acquired image to be blurred. Determining if an image is blurred may be carried out in substantially real time. Non-blurred images may be accepted for use and blurred images may be rejected.

Registering an image of the remainder of the plurality of images with respect to the reference image may comprise ascertaining a transform function which substantially aligns the image with the reference image and applying the transform function to the image. Ascertaining the transform function may comprise choosing a plurality of feature points in the reference image, determining locations of equivalent feature points in the image, and using locations of at least some of the feature points in the reference image and locations of equivalent feature points in the image to ascertain the transform function.

Choosing the plurality of feature points in the reference image may comprise selecting a plurality of points in the reference image, drawing a window around each point, determining any image intensity change in the windows, and choosing points as feature points which have the largest image intensity changes. Determining any image intensity change in a window may comprise determining the first derivative of the image intensity in the window.

Choosing the plurality of feature points in the reference image may comprise using a feature point extraction method such as a good features to track (GFTT) method. Choosing the plurality of feature points in the reference image may comprise choosing 50 feature points or choosing 100 feature points. The feature points may comprise points of the reference image where features in the image appear or disappear, i.e. points around which the positive or negative change in image intensity is relatively large. Such points may comprise points where lines of the image intersect.

Determining locations of equivalent feature points in the image may comprise tracking a feature point from the reference image to the image. Tracking a feature point from the reference image to the image may comprise drawing a window around the feature point in the reference image, calculating the greyscale intensity of the reference image window, selecting a point of the image, drawing an equivalent window around the point in the image, calculating the greyscale intensity of the image window, subtracting the greyscale intensities of the reference image window and the image window, and determining the selected point of the image to be equivalent to the feature point of the reference image when the subtraction yields a substantially zero result. Tracking a feature point from the reference image to the image may comprise using a feature point tracking method such as a Kanade-Lucas-Tomasi (KLT) method.

The method may further comprise eliminating feature points in the reference image for which equivalent feature points in the image cannot be found with a required degree of certainty. This may comprise tracking an equivalent feature point in the image back to the feature point in the reference image. When a feature point tracking method such as a KLT method is used, this may comprise swapping the reference image and the image, reapplying the method, and eliminating feature points for which the result is not substantially similar.

Using locations of at least some of the feature points in the reference image and locations of equivalent feature points in the image to ascertain the transform function may comprise ascertaining differences between feature point locations and equivalent feature point locations and using the differences to obtain the transform function.

Using locations of at least some of the feature points in the reference image and locations of equivalent feature points in the image to ascertain the transform function may comprise determining the feature points of the reference image for which locations of equivalent feature points in the image are known to a required degree of certainty and using these reference image feature points and image equivalent feature points to ascertain the transform function. These feature points may comprise between 4 and 25 points. Determining these feature points may comprise using an outlier detection model such as a random sample consensus (RANSAC) model.

Applying the transform function to the image may comprise multiplying the image with the transform function.

Each of the remainder of the plurality of images is registered with respect to the reference image as described above.

Correcting the registered images for varying image capture illumination conditions may comprise correcting a registered image for differences in brightness between the registered image and the reference image. This may comprise a linear correction. This may comprise multiplying intensities of pixels of the registered image with a brightness correction factor derived from a brightness correction optimisation algorithm that minimises differences in brightness between the registered image and the reference image.

Correcting the registered images for varying image capture illumination conditions may comprise correcting a registered image for differences in gamma between the registered image and the reference image. This may comprise a nonlinear correction. This may comprise calculating a gamma correction factor that minimises differences in gamma between the registered image and the reference image for each blue-green-red (BRG) component and applying the gamma correction factor to intensities of pixels of the registered image. The registered image and the reference image may be shrunk to approximately 10% of their original sizes and the remaining pixels used for calculation of the gamma correction factor and application of this to the registered image.

Correcting the registered images for varying image capture illumination conditions may comprise correcting a registered image for differences in colour between the registered image and the reference image. This may comprise calculating a colour correction factor that minimises differences in colour between the registered image and the reference image for each blue-green-red (BRG) component and applying the colour correction factor to intensities of pixels of the registered image.

Isolating a first part of the hologram by subtracting a corrected image at a first image capture orientation from a corrected image at a second, subsequent, image capture orientation may comprise subtracting intensities of pixels of the corrected image at the first image capture orientation from intensities of equivalent pixels of the corrected image at a second, subsequent, image capture orientation. All or substantially all of the pixels of the corrected images may be used in the subtraction.

According to a second aspect of the invention there is provided an image hologram isolation computer program, tangibly embodied on a computer readable medium, the computer program including instructions for causing a computer to execute the method for hologram isolation according to the first aspect of the invention.

According to a third aspect of the invention there is provided an image hologram isolation system comprising:
an image capture device for acquiring a plurality of images containing the hologram at a plurality of different image capture orientations,
an image registration processor for choosing a reference image from the plurality of images and registering a remainder of the plurality of images with respect to the reference image,
an image correction processor for correcting the registered images for varying image capture illumination conditions, and
a hologram isolation processor for isolating a first part of the hologram by subtracting a corrected image at a first image capture orientation from a corrected image at a second, subsequent, image capture orientation, repeating to isolate all parts of the hologram, and accumulating the parts of the hologram.

The image capture device may be a camera. The camera may be provided in a mobile phone.

The image capture device may comprise a user interface. The user interface may be used to instruct a user to position the hologram at a first image capture orientation relative to the image capture device and acquire at least one image containing the hologram at the first image capture orientation and repeat for further different image capture orientations. The user interface may be used to send feedback on the image capture to the user.

The image capture device may comprise a gyroscope. The user interface may be used with the gyroscope to instruct the user to position the hologram at a first image capture orientation relative to the image capture device and acquire at least one image containing the hologram at the first image capture orientation and repeat for further different image capture orientations.

The image capture device may comprise a flash used for illumination during image capture.

The image capture device may comprise an image processor. The image processor may be used to determine any cropping of the images, to discard an image having defective cropping and to instruct the user interface to instruct the user to acquire a further image to replace the discarded image.

The image capture device may comprise a memory device. The memory device may be used to store the plurality of images containing the hologram along with the image capture orientations of the images.

The image capture device may be provided at a first location. The first location may be at a location of, or at a location accessible to, a user of the image hologram isolation system. The image registration processor, the image correction processor and the hologram isolation processor may be provided together at a second location, remote from the first location. The second location may be at a location of a provider of the image hologram isolation system.

The image hologram isolation computer program product may be provided on the image capture device, the image registration processor, the image correction processor and the hologram isolation processor.

According to a fourth aspect of the invention there is provided a method of using a hologram of a query identification document to authenticate the identification document, comprising the steps of:
building a database of holograms of identification documents,
isolating the hologram from a plurality of images of the query identification document, comparing the hologram of the query identification document with the holograms of the identification documents of the database, and
if a match is found determining that the query identification document is an authentic identification document or if no match is found determining that the query identification document is not an authentic identification document.

Advantages of the invention include that it is accurate and robust for different holograms even when these are not clear to the human eye, it is fast, substantially real-time without any obvious latency, and it is dynamic and adaptive, the total number of acquired images and the number of acquired images at each image capture orientation can be adjusted to adjust the performance versus accuracy of the invention.

### Description of the Invention

Embodiments of the present invention are herein described, by way of example of only, with reference to the accompanying drawings in which:
Figure 1 is a schematic representation of an image hologram isolation system in accordance with the third aspect of the invention;
Figure 2 is a flow chart of a method of hologram isolation in accordance with the first aspect of the invention, and
Figure 3 is a flow chart of a method of using a hologram of a query identification document to authenticate the identification document in accordance with the fourth aspect of the invention.

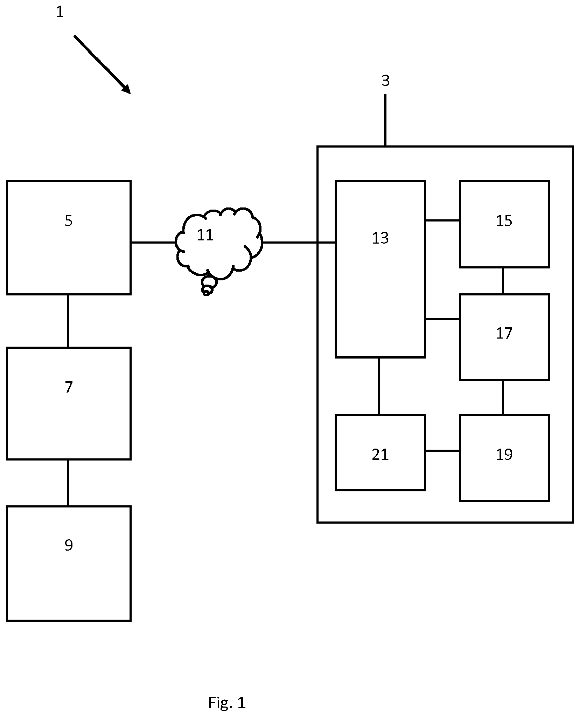

Referring to Figure 1, an image hologram isolation system 1 comprises an image capture device 3, an image registration processor 5, an image correction processor 7, and a hologram isolation processor 9. The image capture device 3 is provided at a location of, or accessible to, a user of the image hologram isolation system 1. The image registration processor 5, the image correction processor 7 and the hologram isolation processor 9 are provided together at a location of a provider of the image hologram isolation system 1. The locations are remote from each other and are wirelessly connected via the Internet 11.

The image capture device 3 is a camera, provided in a mobile phone (not shown). The image capture device 3 comprises a user interface 13, used to instruct the user in acquiring hologram images and to send feedback on the image capture to the user, a gyroscope 15, used to determine image capture orientations, a flash 17, used for illumination during image capture, an image processor 19, used to process the acquired images, and a memory device 21, used to store the acquired hologram images along with their image capture orientations.

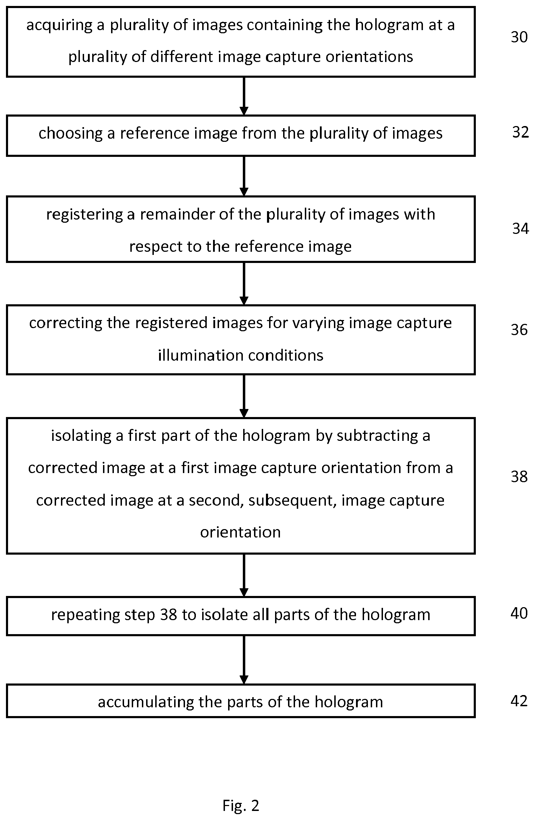

Referring to Figure 2, a method of hologram isolation is described. The method comprises the steps of acquiring a plurality of images containing the hologram at a plurality of different image capture orientations (30), choosing a reference image from the plurality of images (32), registering a remainder of the plurality of images with respect to the reference image (34), correcting the registered images for varying image capture illumination conditions (36), isolating a first part of the hologram by subtracting a corrected image at a first image capture orientation from a corrected image at a second, subsequent, image capture orientation (38), repeating step 38 to isolate all parts of the hologram (40), and accumulating the parts of the hologram (42).

Referring to Figures 1 and 2, the image capture device 3 of the image hologram isolation system 1 is used to acquire a plurality of images containing the hologram at a plurality of different image capture orientations. This comprises using the user interface 13 with the gyroscope 15 of the image capture device 3 to instruct the user of the system 1 to position the hologram at a first image capture orientation relative to the image capture device 3 and acquire an image containing the hologram at the first image capture orientation and repeat for eleven further different image capture orientations.

The image processor 17 of the image capture device 3 is then used to determine any cropping of the images, to discard an image having defective cropping and to instruct the user interface 15 of the image capture device 3 to instruct the user to acquire a further image to replace the discarded image.

The image registration processor 5 receives the plurality of acquired images and is used for choosing a reference image from the plurality of acquired images. In this embodiment, this comprises choosing a random image, determining if the random image is blurred and if it is not, choosing the random image as the reference image.

The image registration processor 5 is then used to register the remainder of the plurality of acquired images with respect to the chosen reference image. This comprises ascertaining a transform function which substantially aligns the image with the reference image and applying the transform function to the image. Ascertaining the transform function comprises choosing a plurality of feature points in the reference image, determining locations of equivalent feature points in the image, and using locations of at least some of the feature points in the reference image and locations of equivalent feature points in the image to ascertain the transform function.

Choosing the plurality of feature points (preferably 50 feature points) in the reference image comprises using a GFTT feature point extraction method to select a plurality of points in the reference image, draw a window around each point, determine any image intensity change in the windows, and choose points as feature points which have the largest image intensity changes.

Determining locations of equivalent feature points in the image comprises tracking a feature point from the reference image to the image. This comprises using a KLT feature point tracking method to draw a window around the feature point in the reference image, calculate the greyscale intensity of the reference image window, select a point of the image, draw an equivalent window around the point in the image, calculate the greyscale intensity of the image window, subtract the greyscale intensities of the reference image window and the image window, and determine the selected point of the image to be equivalent to the feature point of the reference image when the subtraction yields a substantially zero result.

Feature points in the reference image for which equivalent feature points in the image cannot reliably be found are eliminated. This comprises using the KLT feature point tracking method to track an equivalent feature point in the image back to the feature point in the reference image, by swapping the reference image and the image, reapplying the method, and eliminating feature points for which the result is not substantially similar.

The reference image feature point locations are then compared with image equivalent feature point locations. This first comprises using a RANSAC outlier detection model to determine 4 feature points of the reference image for which equivalent feature points in the image are best known.

The locations of these feature points in the reference image and locations of equivalent feature points in the image are then used to ascertain the transform function, by ascertaining differences between the feature point locations and the equivalent feature point locations and using the differences to obtain the transform function.

The transform function is then applied to the image. This comprises multiplying the image with the transform function.

Each of the remainder of the plurality of images is registered with respect to the reference image as described above. The image registration processor 5 outputs the registered images to the image correction processor 7.

The image correction processor 7 corrects the registered images for varying image capture illumination conditions. This comprises correcting each registered image for differences in brightness, gamma and colour between the registered image and the reference image.

Correcting the registered images for differences in brightness between the registered image and the reference image comprises a linear correction, comprising multiplying intensities of pixels of the registered image with a brightness correction factor derived from a brightness correction optimisation algorithm that minimises differences in brightness between the registered image and the reference image.

Correcting the registered images for differences in gamma between the registered image and the reference image comprises a nonlinear correction, comprising calculating a gamma correction factor that minimises differences in gamma between the registered image and the reference image for each blue-green-red (BRG) component and applying the gamma correction factor to intensities of pixels of the registered image. The registered image and the reference image are shrunk to approximately 10% of their original sizes and the remaining pixels used for calculation of the gamma correction factor and application of this to the registered image.

Correcting the registered images for differences in colour between the registered image and the reference image comprises calculating a colour correction factor that minimises differences in colour between the registered image and the reference image for each blue-green-red (BRG) component and applying the colour correction factor to intensities of pixels of the registered image.

The image correction processor 7 outputs the corrected, registered images to the hologram isolation processor 9.

The hologram isolation processor 9 isolates a first part of the hologram. This comprises subtracting a corrected image at a first image capture orientation from a corrected image at a second, subsequent, image capture orientation, by subtracting intensities of pixels of the corrected image at the first image capture orientation from intensities of equivalent pixels of the corrected image at a second, subsequent, image capture orientation. All or substantially all of the pixels of the corrected images may be used in the subtraction.

The hologram isolation processor 9 repeats this process to isolate all parts of the hologram. The hologram isolation processor 9 then accumulates the parts of the hologram to form a complete picture of the hologram.

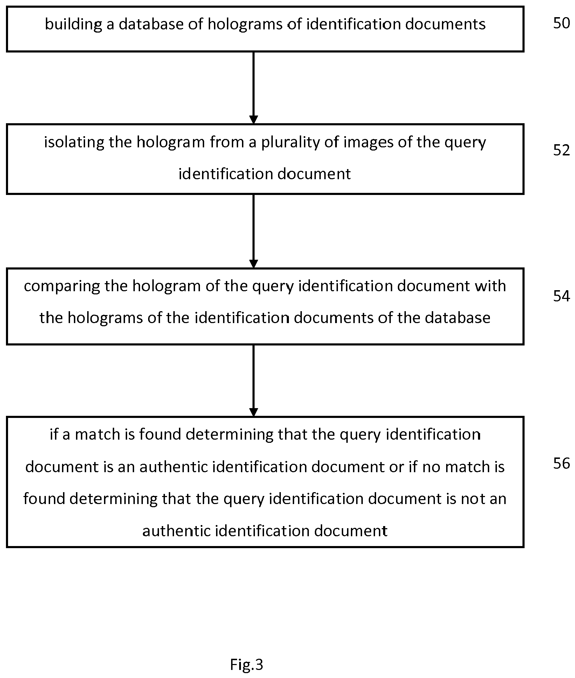

Referring to Figure 3 a method of using a hologram of a query identification document to authenticate the identification document is described. This comprises the steps of building a database of holograms of identification documents (50), isolating the hologram from a plurality of images of the query identification document (52), comparing the hologram of the query identification document with the holograms of the identification documents of the database (54), and if a match is found determining that the query identification document is an authentic identification document or if no match is found determining that the query identification document is not an authentic identification document (56).

## Claims

1. A method of hologram isolation comprising the steps of:
(i) acquiring a plurality of images containing the hologram at a plurality of different image capture orientations (30),
(ii) choosing a reference image from the plurality of images (32),
(iii) registering a remainder of the plurality of images with respect to the reference image (34),
(iv) correcting the registered images for varying image capture illumination conditions (36),
(v) isolating a first part of the hologram by subtracting a corrected image at a first image capture orientation from a corrected image at a second, subsequent, image capture orientation (38),
(vi) repeating step (v) to isolate all parts of the hologram (40), and
(vii) accumulating the parts of the hologram (42).

2. A method according to claim 1 in which acquiring the plurality of images comprises using a user interface of the image capture device to instruct the user to position the hologram at a first image capture orientation relative to the image capture device and acquire at least one image containing the hologram at the first image capture orientation and repeat for further different image capture orientations.

3. A method according to claim 1 or claim 2 in which acquiring the plurality of images comprises using an image processor of the image capture device to determine any cropping of the images, discarding an image having defective cropping and instructing a user interface of the image capture device to instruct a user to acquire a further image to replace the discarded image.

4. A method according to any preceding claim in which choosing a reference image from the plurality of images comprises choosing a random image as the reference image.

5. A method according to claim 4 in which choosing a reference image from the plurality of images comprises determining if any of the acquired images are blurred and choosing a non-blurred image as the reference image.

6. A method according to any preceding claim in which registering an image of the remainder of the plurality of images with respect to the reference image comprises ascertaining a transform function which substantially aligns the image with the reference image and applying the transform function to the image.

7. A method according to claim 6 in which ascertaining the transform function comprises choosing a plurality of feature points in the reference image, determining locations of equivalent feature points in the image, and using locations of at least some of the feature points in the reference image and locations of equivalent feature points in the image to ascertain the transform function.

8. A method according to claim 7 in which choosing the plurality of feature points in the reference image comprises selecting a plurality of points in the reference image, drawing a window around each point, determining any image intensity change in the windows, and choosing points as feature points which have the largest image intensity changes.

9. A method according to claim 7 in which determining locations of equivalent feature points in the image comprises tracking a feature point from the reference image to the image.

10. A method according to claim 9 in which tracking a feature point from the reference image to the image comprises drawing a window around the feature point in the reference image, calculating the greyscale intensity of the reference image window, selecting a point of the image, drawing an equivalent window around the point in the image, calculating the greyscale intensity of the image window, subtracting the greyscale intensities of the reference image window and the image window, and determining the selected point of the image to be equivalent to the feature point of the reference image when the subtraction yields a substantially zero result.

11. A method according to any preceding claim in which correcting the registered images for varying image capture illumination conditions comprises correcting a registered image for differences in any of brightness, gamma, colour between the registered image and the reference image.

12. A method according to any preceding claim in which Isolating a first part of the hologram by subtracting a corrected image at a first image capture orientation from a corrected image at a second, subsequent, image capture orientation comprises subtracting intensities of pixels of the corrected image at the first image capture orientation from intensities of equivalent pixels of the corrected image at a second, subsequent, image capture orientation.

13. An image hologram isolation computer program, tangibly embodied on a computer readable medium, the computer program including instructions for causing a computer to execute the method for hologram isolation according to any of claims 1 to 12.

14. An image hologram isolation system (1) comprising:
an image capture device (3) for acquiring a plurality of images containing the hologram at a plurality of different image capture orientations,
an image registration processor (5) for choosing a reference image from the plurality of images and registering a remainder of the plurality of images with respect to the reference image,
an image correction processor (7) for correcting the registered images for varying image capture illumination conditions, and
a hologram isolation processor (9) for isolating a first part of the hologram by subtracting a corrected image at a first image capture orientation from a corrected image at a second, subsequent, image capture orientation, repeating to isolate all parts of the hologram, and accumulating the parts of the hologram.

15. A method of using a hologram of a query identification document to authenticate the identification document, comprising the steps of:
building a database of holograms of identification documents (50),
isolating the hologram from a plurality of images of the query identification document (52),
comparing the hologram of the query identification document with the holograms of the identification documents of the database (54), and
if a match is found determining that the query identification document is an authentic identification document or if no match is found determining that the query identification document is not an authentic identification document (56).
